# EUROPÄISCHE PATENTSCHRIFT

(11) **EP 2 929 648 B1**
(45) Veröffentlichungstag und Bekanntmachung des Hinweises auf die Patenterteilung: **28.09.2016**
(21) Anmeldenummer: 13798321.9
(22) Anmeldetag: 28.11.2013
(51) Int. Cl.: H04L 9/08, H04L 9/32, H04L 29/06

(54) **VERFAHREN ZUM AUFBAU EINER SICHEREN VERBINDUNG ZWISCHEN CLIENTS**
METHOD FOR SETTING UP A SECURE CONNECTION BETWEEN CLIENTS
PROCÉDÉ POUR ÉTABLIR UNE LIAISON SÛRE ENTRE DES CLIENTS

(30) Priorität: 06.12.2012 DE 102012111903
(43) Veröffentlichungstag der Anmeldung: 14.10.2015
(73) Patentinhaber: Deutsche Post AG, 53113 Bonn (DE); Fraunhofer Gesellschaft zur Förderung der angewandten Forschung e.V., 80686 München (DE)
(72) Erfinder: LEMKE, Harald, 22301 Hamburg (DE); KULICKE, Marcel, 80687 München (DE); SCHNEIDER, Angelika, 85622 Feldkirchen (DE); HETZER, Yves, 99097 Erfurt (DE)
(74) Vertreter: Michalski Hüttermann & Partner Patentanwälte mbB
(86) Internationale Anmeldenummer: PCT/EP2013/074952
(87) Internationale Veröffentlichungsnummer: WO 2014/086654

(56) Entgegenhaltungen:
- EP-A2- 1 722 532
- US-A1- 2011 289 313
- US-A1- 2011 296 508
- US-B1- 8 180 051
- N. SAXENA ET AL: "Secure device pairing based on a visual channel", 2006 IEEE SYMPOSIUM ON SECURITY AND PRIVACY (S&P'06), 1. Januar 2006 (2006-01-01), Seiten 6 pp.-313, XP055100742, DOI: 10.1109/SP.2006.35 ISBN: 978-0-76-952574-7

## Beschreibung

Die Erfindung betrifft ein Verfahren zum Autorisieren eines zweiten Clients gegenüber einem Server für ein Benutzerkonto zum Aufbau einer sicheren Verbindung zwischen dem zweiten Client und einem ersten Client.

Vertrauenswürdige Kommunikation zwischen verschiedenen Teilnehmern im Internet ist aufgrund fehlender Vertrauenswürdigkeit des Mediums Internet und seiner Kommunikationskanäle eine Herausforderung. Um dennoch Vertrauenswürdigkeit zu gewährleisten, werden in der Regel asymmetrische kryptografische Verfahren verwendet, bei denen zuvor ein Austausch der öffentlichen Schlüssel zwischen den Clients, also zwischen Computern, Servern, Tablet-PCs, Smartphones etc., erforderlich ist.

Die Sicherheit eines solchen Verfahrens hängt davon ab, ob der Austausch der Schlüssel nicht kompromittiert wird, d.h. dass sich die Clients sicher sein können, dass der öffentliche Schlüssel auch tatsächlich vom anderen Client stammt und umgekehrt. Diese Unsicherheit wird u.a. durch Man-In-The-Middle-Angriffe aktiv ausgenutzt.

Zur Vermeidung derartiger Angriffe werden zwei unterschiedliche Lösungsansätze verwendet. Einerseits lässt sich eine sogenannte Public-Key-Infrastruktur (PKI) nutzen, bei der ein PKI-Dienstleister als Notar fungiert und die Authentizität der Schlüssel sicherstellt. Andererseits können die Clients in einem sogenannten Peer-to-Peer-Netzwerk organisiert sein, in dem die Clients ohne zwischengeschalteten Dienstleister direkt untereinander kommunizieren und in eigener Verantwortung ihre Schlüssel austauschen.

Für den Betreiber eines Internetdienstes für besonders sichere und vertrauliche Kommunikation kommen beide Verfahren jedoch nicht in Frage. Denn der Betreiber kann nicht gleichzeitig sowohl der PKI-Betreiber als auch der Notar sein, weil er damit zumindest technisch in der Lage wäre, die Vertraulichkeit seines eigenen Dienstes vorsätzlich, durch Versehen oder als Folge eines erfolgreichen Angriffs, auf seine Infrastruktur zu kompromittieren. Aus technischer Sicht würde es sich dann nicht mehr um eine "Ende-zu-Ende-Verschlüsselung" handeln.

Andererseits würde die Nutzung einer fremden PKI-Infrastruktur das Geschäftsmodell des Betreibers gefährden, weil seine Dienstleistung im elementaren Bereich der Herstellung eines Vertrauensverhältnisses zwischen den Clients der Nutzer von Dritten abhängig ist. Zudem würde dadurch das Vertrauensproblem nur auf diesen Dritten verlagert, bestünde aber generell weiter.

Schließlich kollidiert auch die Nutzung eines grundsätzlich offenen Peer-to-Peer-Netzes mit den wirtschaftlichen Interessen des Betreibers. Darüber hinaus geht der Betreiber unkalkulierbare Risiken ein, weil er für die Qualität und die Sicherheit seines Dienstes verantwortlich ist und die sichere Autorisierung der Teilnehmer die Grundlage seines Wertversprechens ist.

Im Stand der Technik existieren eine Vielzahl von symmetrischen und asymmetrischen Verschlüsselungsverfahren in verschiedensten Stärken und Längen. Zu den bekannten symmetrischen Verfahren zählen insbesondere AES (Advanced Encryption Standard), DES/3DES (Data Encryption Standard), IDEA (International Data Encryption Algorithm), Blowfish, Twofish, CAST-* (Carlisle Adams Stafford Tavares) und RC* (Rivest Cipher), während zu bekannten asymmetrischen Verfahren insbesondere RSA (Rivest Shamir Aldeman), Elgamal, Merkle-Hellmann sowie Rabin zählen.

US 2011 / 296508 A1 beschreibt einen digitalen Handshake zum Einrichten eines sicheren Kommunikationspfades zwischen zwei elektronischen Geräten.

Dokument "Secure Device Pairing based on a Visual Channel" of N. Saxena, 2006 IEEE Symposium on Security and Privacy, beschreibt wie starke gegenseitige Authentifizierung mit einem unidirektionalen visuellen Kanal erreicht werden kann.

Diese Verfahren haben allerdings systemische Schwächen. So ist bei symmetrischen Verfahren der Schlüssel zum Verschlüsseln identisch mit dem Schlüssel zum Entschlüsseln. Dies stellt bei der Nachrichtenübermittlung hohe Anforderungen an den Schlüsselaustausch zwischen den beteiligten Parteien. Bei asymmetrischen Verfahren existieren zwar getrennte Schlüssel für die Verschlüsselung und die Entschlüsselung, allerdings müssen die an einem verschlüsselten Nachrichtenaustausch beteiligten Teilnehmer sicherstellen, dass ihr Schlüssel auch wirklich mit dem des anderen Teilnehmers korrespondiert und nicht ein Dritter sich in die Kommunikation eingeschaltet hat, und die Kommunikation insofern als nicht mehr sicher betrachtet werden kann.

Speziell bei der Absicherung von Geheimnissen, wie z.B. Passwörtern oder Transaktionsnummern, werden gesonderte Verfahren, so genannte Hashverfahren, eingesetzt. Mittels Hashverfahren ist verifizierbar, ob ein vorhandenes Geheimnis mit dem Geheimnis übereinstimmt, was von einem Teilnehmer oder einem System übermittelt wurde. Mit Hashverfahren kann diese Verifikation vorgenommen werden, ohne das Geheimnis selber zu speichern. Stattdessen wird nur das Ergebnis einer vorzugsweisen kollisionsarmen bzw. freien Funktion gespeichert, deren Eingabe das Geheimnis nebst einer Zufallszahl war. Dies erhöht die Sicherheit des Geheimnisses, weil eine Kompromittierung des Speichersystems des Geheimnisses nicht zur Kompromittierung des Geheimnisses selber führt.

Zur Lösung des Vertrauensproblems bei asymmetrischen Verschlüsselungsverfahren existieren ebenfalls diverse Verfahren, so beispielsweise Kerberos, PGP, Off-The-Record Messaging, S/MIME oder Public Key Infrastructure.

Ausgehend von zuvor genannten Problemstellungen liegt der Erfindung die Aufgabe zu Grunde, ein Verfahren anzugehen, so dass nur autorisierte Clients Nachrichten entschlüsseln und damit lesen können, nicht jedoch ein nichtautorisierter Server oder sonstiger Dritter.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Demnach wird die Aufgabe gelöst durch ein Verfahren zum Autorisieren eines zweiten Clients gegenüber einem Server für ein Benutzerkonto zum Aufbau einer sicheren Verbindung zwischen dem zweiten Client und einem ersten Client, wobei das Verfahren die Schritte aufweist:
a) Erzeugen einer Zufallszahl durch den ersten Client,
b) Anzeigen der Zufallszahl durch den ersten Client,
c) Erzeugen eines ersten Hashwertes aus der Zufallszahl durch den ersten Client, wobei der erste Hashwertwert einen symmetrischen Schlüssel, ein Passwort und einen Initialisierungsvektor umfasst,
d) Erzeugen, durch den ersten Client, eines ersten Datenpaketes aus einer Bezeichnung des Benutzerkontos, aus einem ersten öffentlichen Schlüssel des ersten Clients und aus einem Hashwert des ersten öffentlichen Schlüssels,
e) Verschlüsseln des ersten Datenpaketes mittels des symmetrischen Schlüssels und des Initialisierungsvektors durch den ersten Client,
f) Erzeugen eines zweiten Hashwertes aus dem Passwort unter Verwendung des Initialisierungsvektors als Salt durch den ersten Client,
g) Übertragen des verschlüsselten ersten Datenpaketes und des zweiten Hashwertes von dem ersten Client an den Server,
h) Empfangen, durch einen zweiten Client, der Bezeichnung des Benutzerkontos und der Zufallszahl von einem Eingabemittel des zweiten Clients,
i) Erzeugen des ersten Hashwertes aus der via Eingabemittel empfangenen Zufallszahl durch den zweiten Client, wobei der erste Hashwert den symmetrischen Schlüssel, das Passwort und den Initialisierungsvektor umfasst,
j) Erzeugen des zweiten Hashwertes aus dem Passwort unter Verwendung des Initialisierungsvektors als Salt durch den zweiten Client,
k) Übertragen des zweiten Hashwertes von dem zweiten Client an den Server,
l) Vergleichen des von dem ersten Client erhaltenen zweiten Hashwertes mit dem von dem zweiten Client erhaltenen zweiten Hashwert durch den Server und bei Übereinstimmung Übertragen des verschlüsselten ersten Datenpaketes durch den Server an den zweiten Client,
m) Entschlüsseln des verschlüsselten ersten Datenpaketes mittels des symmetrischen Schlüssels und des Initialisierungsvektors durch den zweiten Client zum Erhalten einer entschlüsselten Bezeichnung des Benutzerkontos, eines entschlüsselten zweiten öffentlichen Schlüssels und eines entschlüsselten Hashwertes des zweiten öffentlichen Schlüssels,
n) Vergleichen, durch den zweiten Client, die entschlüsselte Bezeichnung des Benutzerkontos mit dem via Eingabemittel empfangenen Bezeichnung des Benutzerkontos, des entschlüsselten öffentlichen Schlüssels mit dem ersten öffentlichen Schlüssel des ersten Clients und/oder des entschlüsselten Hashwertes mit dem Hashwert des ersten öffentlichen Schlüssels des ersten Clients.

Wesentlicher Punkt der Erfindung ist somit, dass die Vertrauenswürdigkeit der Clients, also beispielsweise laufende Software auf informationstechnischen Systemen, wie einer App auf einem Tablet-PC, über verschiedene Verschlüsselungsmethoden sowie ein zusätzliches Geheimnis, der Zufallszahl, welches nur den Clients sowie deren Benutzern bekannt ist, erreicht wird. Dem liegt ein Benutzerkonto zugrunde, welches mit den vom Benutzer genutzten Clients verknüpft ist. Damit wird ein Vertrauensverbund unter den Clients geschaffen, bei dem jeder beteiligte Client sicher sein kann, dass die jeweils anderen, teilnehmenden Clients vertrauenswürdig sind oder aber zwischen den Clients ausgetauschte Nachrichten nicht entschlüsseln können, während der Server mangels Kenntnis des Geheimnisses, also der Zufallszahl, die zwischen den Clients ausgetauschten Nachrichten nicht entschlüsseln kann.

Mit Hilfe des Geheimnisses erfolgt eine explizite Aufnahme eines weiteren Clients in den Verbund in Form einer Autorisierung durch den Nutzer. Nach Abschluss dieses Verfahrens sind die Clients im Besitz eines mit Sicherheit vom angenommenen anderen Client stammenden, kryptographischen Schlüssels mit dem dann verschlüsselte Nachrichten zwischen den Clients ausgetauscht werden können.

Der Austausch der Nachrichten wird in diesem Verfahren über einen zentralen Server erreicht. Der Server ist aber keine vertrauenswürdige Instanz und muss daher, genauso wie die genutzten Kommunikationskanäle, als potenziell kompromittiert betrachtet werden. Es gilt somit, dass es keine Möglichkeit für den zentralen Server geben darf, die zwischen den Clients ausgetauschten Nachrichten entschlüsseln oder lesen zu können. Die Verschlüsselung der ausgetauschten Nachrichten erfolgt über ein asymmetrisches Verschlüsselungsverfahren, bei dem die Clients der Teilnehmer ihre öffentlichen Schlüssel untereinander austauschen. Sofern nun das Verfahren erfolgreich gemäß Schritt n) beendet wird, können zwischen den autorisierten Clients Nachrichten sicher ausgetauscht werden. Selbstredend ist das Verfahren auch für mehr als zwei Client einsetzbar, wie für den Fachmann unmittelbar und direkt ersichtlich ist.

Durch das Verfahren wird sichergestellt, dass nur solche Clients die Nachrichten entschlüsseln und damit lesen können, die ein Benutzer mit Hilfe eines bereits autorisierten Clients für das Benutzerkonto autorisiert hat. Der Server hat keine Möglichkeit, beabsichtigt oder unbeabsichtigt einen nicht für das Benutzerkonto autorisierten Client in das Benutzerkonto einzubinden. Besonders vorteilhaft ist das Verfahren somit für Anwendungen, die besonderen Geheimhaltungspflichten unterliegen, so beispielsweise dem § 203 StGB. Das Verfahren stellt somit sicher, dass die Autorisierung von Clients für ein Benutzerkonto unter der vollen Kontrolle des Benutzers stattfindet. Der Betreiber des Servers hat dabei keine Möglichkeit, den Autorisierungsprozess zu kompromittieren oder unbefugt einen anderen Client für das Anwenderkonto zu autorisieren.

Vorzugsweise werden die einzelnen Schritte des Verfahrens nacheinander durchgeführt, also beispielsweise der Schritt b) erst nach dem Schritt a). Das Anzeigen der Zufallszahl erfolgt vorzugsweise auf einem Anzeigemittel des Clients, so beispielsweise auf einem Display oder einem Monitor. Die Bezeichnung des Benutzerkontos umfasst vorzugsweise eine Mehrzahl alphanumerischer Zeichen, während der öffentliche Schlüssel mittels aus dem Stand bekannter Verfahren, wie vorab diskutiert, erzeugt wird. Ganz besonders bevorzugt ist der erste Client vor Beginn des Verfahrens bereits gegenüber dem Server für das betreffende Benutzerkonto autorisiert. Weiter bevorzugt sind der erste Client, der zweite Client und der Server innerhalb eines Computernetzwerkes zum Austausch von Informationen und Nachrichten miteinander verbunden, so beispielsweise über LAN oder WLAN. Das Eingabemittel ist bevorzugt als Tastatur oder touch-screen display ausgeführt, so dass der Benutzer mittels des Eingabemittels die Zufallszahl auf dem zweiten Client im Rahmen des Schrittes h) eingeben kann.

Nach einer bevorzugten Ausführungsform ist vorgesehen, dass das Verfahren folgende weitere Schritte umfasst:
o) Erzeugen, durch den zweiten Client, eines zweiten Datenpaketes aus der Bezeichnung des Benutzerkontos, aus einem zweiten öffentlichen Schlüssel des zweiten Clients und aus einem Hashwert des zweiten öffentlichen Schlüssels,
p) Verschlüsseln des zweiten Datenpaketes mittels des symmetrischen Schlüssels und des Initialisierungsvektors durch den zweiten Client,
q) Übertragen des verschlüsselten zweiten Datenpaketes von dem zweiten Client an den Server,
r) Übertragen des verschlüsselten zweiten Datenpaketes von dem Server an den ersten Client,
s) Entschlüsseln des verschlüsselten zweiten Datenpaketes mittels des symmetrischen Schlüssels und des Initialisierungsvektors durch den ersten Client zum Erhalten einer entschlüsselten Bezeichnung des Benutzerkontos, eines entschlüsselten zweiten öffentlichen Schlüssels und eines entschlüsselten Hashwertes des zweiten öffentlichen Schlüssels,
t) Vergleichen, durch den ersten Client, der entschlüsselten Bezeichnung des Benutzerkontos mit der Bezeichnung des Benutzerkontos, des entschlüsselten zweiten öffentlichen Schlüssels mit dem zweiten öffentlichen Schlüssel des zweiten Clients und des entschlüsselten Hashwertes mit dem Hashwert des zweiten öffentlichen Schlüssels des zweiten Clients.

Wenn die Integrität des zweiten Datenpakets verifiziert ist, kann der erste Client sicher sein, dass der öffentliche Schlüssel des zweiten Clients tatsächlich vom zweiten Client stammt, so dass vertrauliche Nachrichten zwischen den Clients ausgetauscht werden können.

Nach einer weiteren bevorzugten Ausführungsform ist vorgesehen, dass Schritt d) ferner umfasst: Erzeugen des ersten Datenpaketes aus einem Zeitstempel, Schritt e) ferner umfasst: Entschlüsseln des verschlüsselten ersten Datenpaketes zum Erhalten eines entschlüsselten Zeitstempels und Schritt n) ferner umfasst: Vergleichen des entschlüsselten Zeitstempels mit einem aktuellen Zeitstempel. Zudem ist bevorzugt, dass Schritt o) ferner umfasst: Erzeugen des zweiten Datenpaketes aus einem Zeitstempel, Schritt s) ferner umfasst: Entschlüsseln des verschlüsselten zweiten Datenpaketes zum Erhalten eines entschlüsselten Zeitstempels und Schritt t) ferner umfasst: Vergleichen des entschlüsselten Zeitstempels mit einem aktuellen Zeitstempel.

Durch Vergleich des erhaltenen entschlüsselten Zeitstempels mit einem aktuellen Zeitstempel kann eine eventuelle Replay-Attacke erkannt werden und veraltete Datenpakete verworfen werden. Dies ist vorteilig, da ansonsten ein möglicher Angreifer unbegrenzt Zeit hätte, das Datenpaket mit Brute-Force-Methoden zu dechiffrieren.

Grundsätzlich lässt sich der erste Hashwert mit einer beliebigen aus dem Stand der Technik bekannten Methode zur Erzeugung einer kryptologischen Hashfunktion ermitteln. Vorliegend ist jedoch besonders bevorzugt, dass der erste Hashwert mittels SHA-1, SHA-2 und/oder SHA-3 erzeugt wird, der symmetrische Schlüssel eine Schlüssellänge ≥ 256 Bit aufweist, das Passwort eine Länge von ≥128 Bit aufweist und/oder der Initialisierungsvektor eine Länge von ≥128 Bit aufweist. Darüber hinaus sind bevorzugt auch größere Längen verwendbar, wobei ganz bevorzugt der Hashwert mittels SHA-384 ermittelt wird. Bei vorgenannten Längen stellen bevorzugt die ersten 256 Bit des SHA-384 Hashwertes den symmetrischen Schlüssel dar, Bits 129 bis 256 das Passwort und Bits 257 bis 384 den Initialisierungsvektor.

Das Verschlüsseln und/oder Entschlüsseln des Datenpaketes wird vorzugsweise durch AES-256 durchgeführt, wobei ebenso noch sicherere symmetrische Verfahren verwendbar sind. Das Erzeugen des zweiten Hashwertes aus dem Passwort wird bevorzugt unter Verwendung des Initialisierungsvektors als Salt mittels ≥ 10, vorzugsweise ≥ 20 und ganz besonders bevorzugt ≥ 50 Runden bcrypt durchgeführt wird. Insofern wird bevorzugt der Initialisierungsvektor an das Passwort vor Bestimmung des Hashwertes angehängt, um die Entropie der Eingabe zu erhöhen. Neben bcrypt sind auch weitere kryptologische Hashfunktionen einsetzbar. Die Zufallszahl kann grundsätzlich eine beliebige Länge aufweisen, wobei bevorzugt die Zufallszahl eine Länge von ≥24 alphanumerischer Zeichen aufweist. Weiter bevorzugt umfasst Schritt b) das Darstellen der Zufallszahl Base64-codiert, vorzugsweise auf einem Anzeigemittel.

Die Aufgabe der Erfindung wird weiterhin gelöst durch ein Verfahren zum Austausch von verschlüsselten Nachrichten zwischen einem ersten Client und einem zweiten Client, aufweisend die Schritte:
Autorisieren des zweiten Clients gegenüber einem Server gemäß einem Verfahren wie vorab beschrieben,
Verschlüsseln einer Nachricht auf dem ersten Client mit einem asymmetrischen Verschlüsselungsverfahren,
Übertragen der verschlüsselten Nachricht von dem ersten Client zu dem zweiten Client, und
Entschlüsseln der Nachricht auf dem zweiten Client mittels eines asymmetrischen Entschlüsselungsverfahrens.

Durch das Verfahren lassen sich zwischen den Clients Nachrichten verschlüsselt austauschen, ohne dass der Server Zugriff auf den Inhalte der Nachrichten hat.

Die Aufgabe der Erfindung wird ferner gelöst durch ein Computersystem mit einem Server, einem ersten Client und wenigstens einem zweiten Client, wobei der Server, der erste Client und der zweite Client derart ausgestaltet sind, dass ein Verfahren wie vorab beschrieben auf dem Server, dem ersten Client und dem zweiten Client ausgeführt wird.

Zudem wird die Aufgabe der Erfindung gelöst durch ein digitales Speichermedium mit elektronisch auslesbaren Steuersignalen, wobei die Steuersignale so mit einem programmierbaren Computersystem zusammenwirken können, dass ein Verfahren wie vorab beschrieben ausgeführt wird.

Schließlich wird die Aufgabe der Erfindung gelöst durch ein Computer-Programm-Produkt mit auf einem maschinenlesbaren Träger gespeichertem Programmcode zur Durchführung des Verfahrens wie vorab beschrieben, wenn der Programmcode auf einer Datenverarbeitungsvorrichtung ausgeführt wird.

Nachfolgend wird die Erfindung unter Bezugnahme auf die anliegende Zeichnung anhand einer bevorzugten Ausführungsform näher erläutert.

Es zeigen
- Fig. 1: einen schematischen Ablauf zur Initialisierung und Übergabe eines ersten Datenpaketes von einem ersten Client an einen Server gemäß einem bevorzugten Ausführungsbeispiel der Erfindung,
- Fig. 2: einen schematischen Ablauf zum Entschlüsseln und Prüfen des ersten Datenpaketes durch einen zweiten Client gemäß dem bevorzugten Ausführungsbeispiel der Erfindung,
- Fig. 3: einen schematischen Ablauf zum Erzeugen eines zweiten Datenpaketes an dem zweiten Client gemäß dem bevorzugten Ausführungsbeispiel der Erfindung,
- Fig. 4: einen schematischen Ablauf zum Entschlüsseln und Prüfen des zweiten Datenpaketes an dem ersten Client gemäß dem bevorzugten Ausführungsbeispiel der Erfindung, und
- Fig. 5: eine Übersicht der Kommunikation zwischen dem ersten Client, dem zweiten Client und dem Server gemäß dem bevorzugten Ausführungsbeispiel der Erfindung.

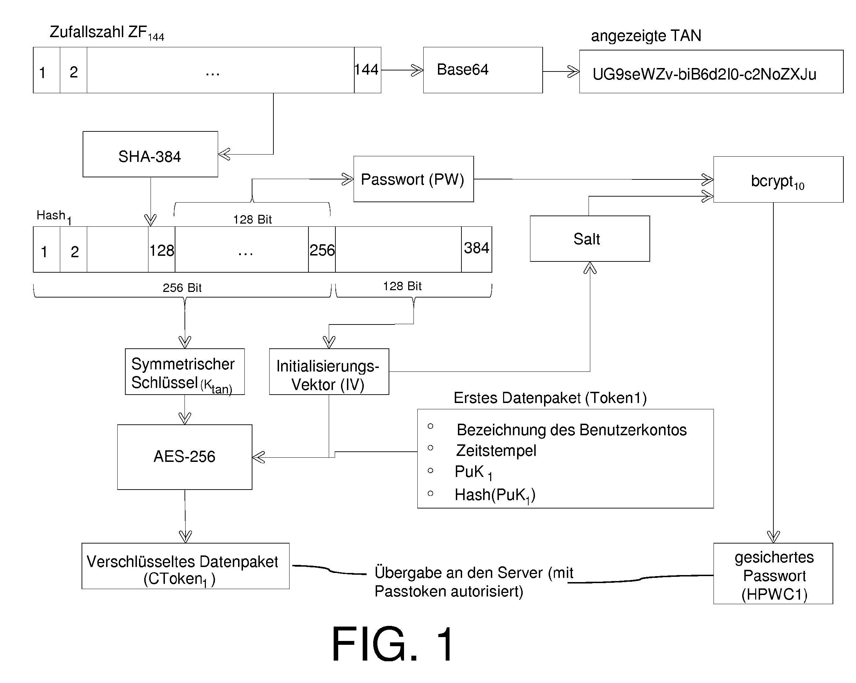

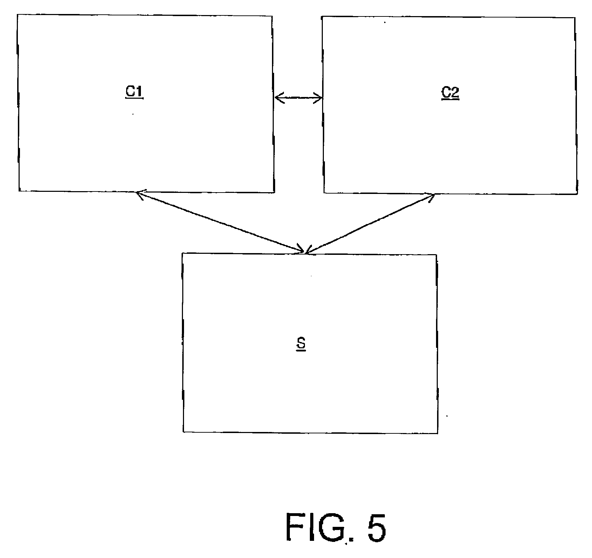

Die Fig. 1 bis 4 zeigen einen schematischen Ablauf eines Verfahrens zur sicheren Autorisierung von Clients C1, C2 in einem Netzwerk, welches neben den Clients C1, C2 einen Server S aufweist, wie in Fig. 5 gezeigt. Vorliegend sind die Clients C1, C2 als ein iPad sowie ein PC ausgeführt, auf denen jeweils eine Software zur Ausführung des nachfolgenden Verfahrens in Form einer App abläuft.

Der Server S verwaltet ein Benutzerkonto, für den der Client C1 autorisiert ist. Damit nun der erst Client C1 mit dem zweiten Client C2 in sicherer Weise verschlüsselte Dokumente austauschen, aufbewahren und bearbeiten kann, ist der zweite Client C2 gegenüber dem Server für das Benutzerkonto zu autorisieren.

Dazu wird, wie in Fig. 1 gezeigt, auf dem ersten Client C1 eine 24-stellige Zufallszahl ZF erzeugt, die Base64-codiert auf dem ersten Client C1 als Transaktionsnummer TAN auf einem Display des Clients C1 angezeigt wird. Aus der Zufallszahl ZF wird mittels SHA-384 eine 384-Bit lange Zahl als erster Hashwert Hash1 erzeugt. Der erste Hashwert Hash1 umfasst einen symmetrischen 256 Bit langen AES-Schlüssel Ktan, ein 128 Bit langes Passwort PW sowie einen 128 Bit langen Initialisierungsvektor IV.

Danach wird auf dem ersten Client C1 ein erstes Datenpaket Token1 erzeugt, welches aus einer Bezeichnung des Benutzerkontos, aus einem Zeitstempel mit der derzeitigen Zeit des ersten Clients C1, aus einem ersten öffentlichen Schlüssel PuK1 des ersten Clients C1 sowie aus einem Hashwert des ersten öffentlichen Schlüssels von PuK1 besteht.

Das erste Datenpaket Token1 wird mittels des symmetrischen Schlüssels Ktan und des Initialisierungsvektors IV als verschlüsseltes erstes Datenpaket CToken1 verschlüsselt. Der Initialisierungsvektor IV wird zudem als Salt verwendet, um mit 10 Runden bcrypt einen zweiten Hashwert HPWC1 aus dem Passwort PW zu erzeugen.

Nach Durchführung vorgenannter Schritte auf dem ersten Client C1 überträgt der erste Client C1 das verschlüsselte erste Datenpaket CToken1 und den zweiten Hashwert HPWC1 an den Server S. Der Server S speichert das empfangene verschlüsselte erste Datenpaket CToken1 und den zweiten Hashwert HPWC1. Der Server S verfügt weder über die Zufallszahl ZF noch über die Transaktionsnummer TAN, so dass der Server S selbst das erste Datenpaket CToken1 nicht entschlüsseln kann.

Die durch den ersten Client C1 auf einem Display des ersten Clients C1 angezeigte Zufallszahl ZF bzw.
Transaktionsnummer TAN wird mittels einem Eingabemittel, so beispielsweise einer Tastatur oder einem touch-sensitiven Display, auf dem zweiten Client C2 zusammen mit der Bezeichnung des Benutzerkontos durch einen Benutzer eingegeben. Es findet somit kein direkter sondern nur ein manueller Austausch der Zufallszahl ZF bzw. Transaktionsnummer TAN und der Bezeichnung des Benutzerkontos zwischen dem ersten Client C1 und dem zweiten Client C2 statt, so beispielsweise nicht elektronisch automatisiert über ein Netzwerk.

Der Client C2 erzeugt danach aus der eingegebenen Zufallszahl ZF bzw. aus der Transaktionsnummer TAN in identischer Weise wie vorab auf dem ersten Client C1 das Passwort PW und übergibt dieses als Hashwert HPWC2 an den Server S. Wenn das derart codierte Passwort PW nach Prüfung durch den Server S richtig ist, übergibt der Server C1 das verschlüsselte erste Datenpaket CToken1 an den zweiten Client C2.

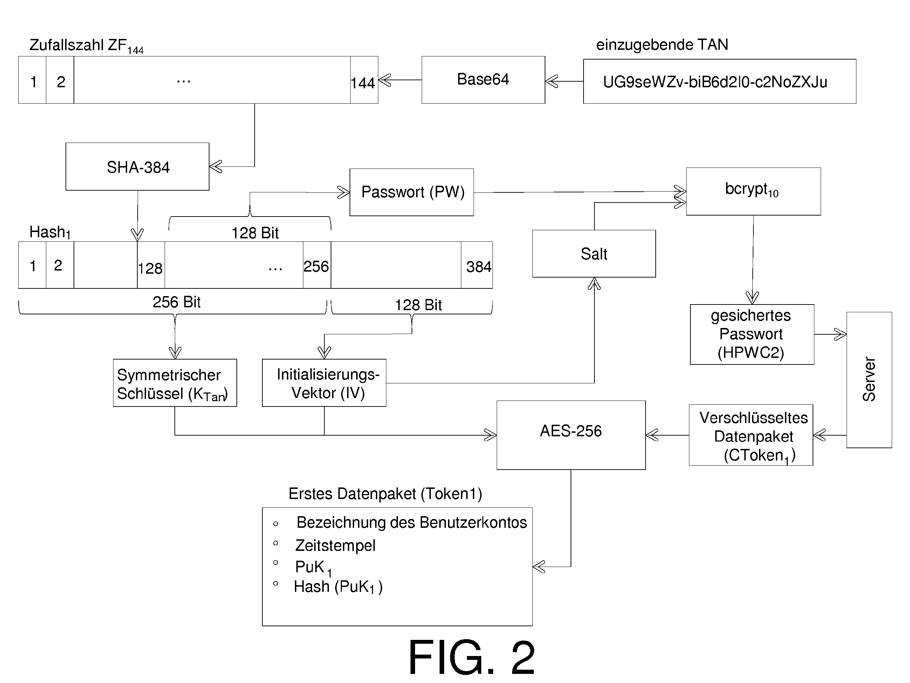

Konkret wird dazu auf dem zweiten Client C2 mittels SHA-384 zunächst eine 384-Bit lange Zahl als erster Hashwert Hash1 erzeugt. Der erste Hashwert Hash1 umfasst den symmetrischen 256 Bit langen AES-Schlüssel Ktan, das 128 Bit lange Passwort PW sowie den 128 Bit langen Initialisierungsvektor IV, wie in Fig. 2 gezeigt. Zwar könnte ein kompromittierter Server S das verschlüsselte erste Datenpaket CToken1 an unbefugte Clients verteilen, diese können jedoch mit dem verschlüsselten ersten Datenpaket CToken1 ohne die Transaktionsnummer TAN bzw. die Zufallszahl ZF nichts anfangen.

Im Folgenden entschlüsselt der zweite Client 2 das verschlüsselte erste Datenpaket CToken1 im identischen bzw. analogen Verfahren wie das erste Datenpaket Token1 auf dem ersten Client C1 verschlüsselt wurde. Danach wird die Integrität des entschlüsselten ersten Datenpakets Token1 überprüft. Zusammen mit dem Initialisierungsvektor IV, der als Salt genutzt wird, wird mittels eines sogenannten sicheren Hashverfahrens der zweite Hashwert HPWC2 des Passworts PW berechnet. Die daraus entstehende Zeichenfolge, der zweite Hashwert HPWC2, wird an den Server S übergeben. Wenn der zweite durch den zweiten Client 2 berechnete Hashwert HPWC2 mit dem vom ersten Client 1 erhaltenen zweiten Hashwert HPWC1, der auf dem Server S mit vorherigem Schritt abgelegt worden ist, übereinstimmt, dann übergibt der Server S das verschlüsselte erste Datenpaket CToken1 an den zweiten Client C2.

Das Verfahren zum Berechnen des zweiten Hashwertes HPCW1, HPCW2 weist vorzugsweise einen einstellbaren Kostenfaktor für den Aufwand bei der Hashwertberechnung auf. Je höher dieser Faktor ist, desto aufwändiger ist die Erstellung des Hashwertes HPCW1, HPCW2 und umso besser ist eine ausreichende Sicherheit für den Gültigkeitszeitraum dieses Verfahrens sicherstellbar.

Wenn die Integrität des ersten Datenpakets Token1 derart verifiziert ist, kann der zweite Client C2 sicher sein, dass der öffentliche Schlüssel PuK1 des ersten Clients C1 tatsächlich vom ersten Client C1 stammt. Ebenso kann der zweite Client C2 den Zeitstempel überprüfen und veraltete Datenpakete Token1 verwerfen, weil ein möglicher Angreifer dann zuviel Zeit hätte, das Datenpaket Token1 mit Brut-Force-Methoden zu dechiffrieren.

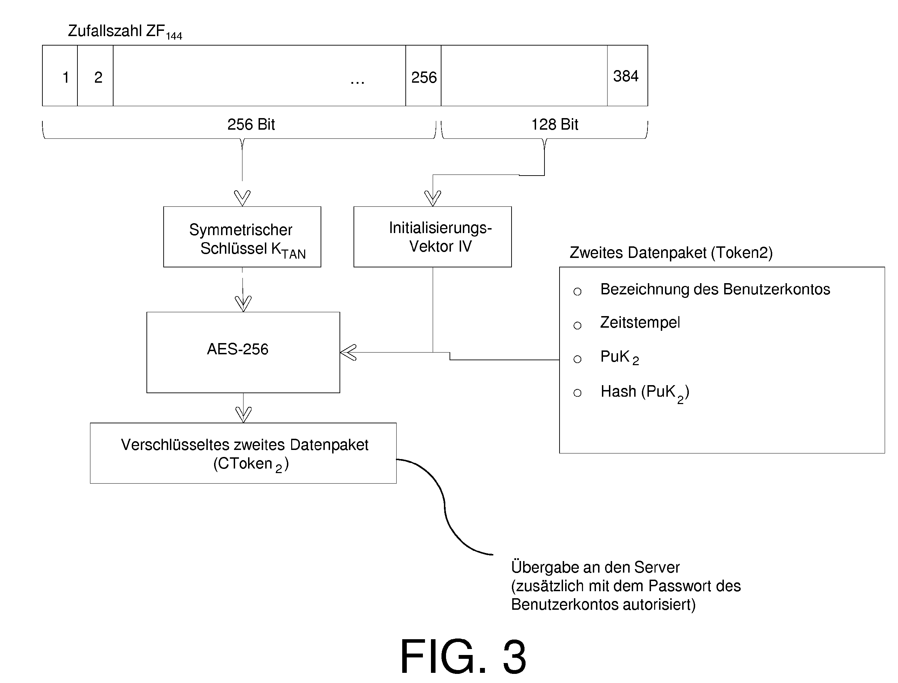

Nachdem der zweite Client C2 das erste Datenpaket Token1 wie vorbeschrieben verifiziert hat, erzeugt der zweite Client C2 ein zweites Datenpaket Token2 mit der Bezeichnung des Benutzerkontos, einem Zeitstempel mit der derzeitigen Uhrzeit, einem zweiten öffentlichen Schlüssel PuK2 des zweiten Clients C2 und einem Hashwert des zweiten öffentlichen Schlüssels PuK2 des zweiten Clients C2, wie in Fig. 3 gezeigt. Das zweite Datenpaket Token2 wird anschließend mit dem aus der Zufallszahl ZF bzw. der Transaktionsnummer TAN abgeleiteten symmetrischen Schlüssel Ktan sowie dem Initialisierungsvektor IV verschlüsselt. Das daraus resultierende verschlüsselte zweite Datenpaket CToken2 wird dann durch den zweiten Client C2 an den Server S übergeben.

Der Server S hält das verschlüsselte zweite Datenpaket CToken2 für den Client C1 bereit. Der Server S hat keine Möglichkeit, das verschlüsselte zweite Datenpaket CToken2 zu entschlüsseln, weil der Server S den aus der Zufallszahl ZF bzw. der Transaktionsnummer TAN abgeleiteten symmetrischen Schlüssel Ktan nicht kennt.

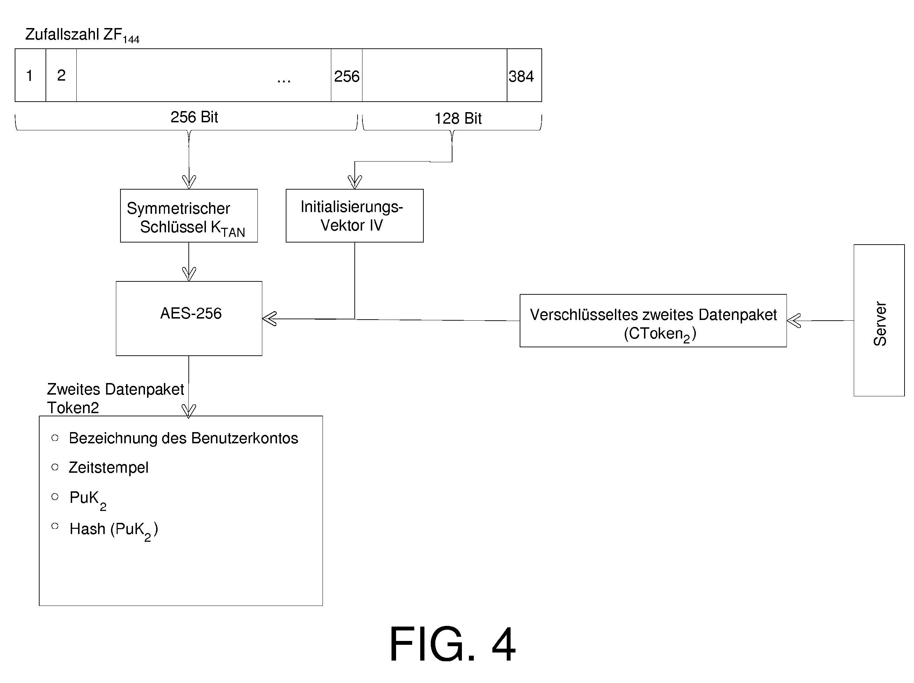

Nachdem der erste Client C1 das verschlüsselte zweite Datenpaket CToken2 vom Server S erhalten hat, führt der erste Client C1 die vorbeschriebene Verifikation wie der zweite Client C2 durch, wie in Fig. 4 dargestellt. Konkret wird das zweite verschlüsselte Datenpaket CToken2 mit dem aus der Zufallszahl ZF bzw. der Transaktionsnummer TAN abgeleiteten symmetrischen Schlüssel Ktan sowie dem Initialisierungsvektor IV entschlüsselt. Wenn die Integrität des zweiten Datenpakets Token 2 derart durch Vergleich der Bezeichnungen des Benutzerkontos, der entschlüsselten zweiten öffentlichen Schlüssel PuK2 sowie der entschlüsselten Hashwerte des zweiten öffentlichen Schlüssel PuK2 verifiziert ist, kann der erste Client C1 sicher sein, dass der zweite öffentliche Schlüssel PuK2 tatsächlich vom zweiten Client C2 stammt.

Ebenso kann der erste Client 1 den Zeitstempel mit seiner aktuellen Zeit vergleichen und so eventuelle Replay-Attacken erkennen und veraltete zweite Datenpakete Token2 verwerfen. Dies ist vorteilig, weil ein möglicher Angreifer ansonsten unbegrenzt Zeit hätte, das zweite Datenpaket Token2 mit Brute-Force-Methoden zu dechiffrieren.

Im Falle einer positiven Prüfung aus dem vorangegangen Schritt ist das Pairing der Clients C1, C2 erfolgreich abgeschlossen. Die Clients C1, C2 haben ihre jeweiligen öffentlichen Schlüssel PuK1, PuK2 auf eine sichere Art und Weise über einen unsicheren Kanal ausgetauscht und können nun mit Hilfe der öffentlichen Schlüssel PuK1, PuK2 Nachrichten End-zu-End-verschlüsselt über den Server S austauschen, die auch der Server S nicht entschlüsseln kann.

Das vorbeschriebene Verfahren ist auch für weitere Clients einsetzbar, wobei dazu dann selbstredend ein zusätzlicher Austausch der öffentlichen Schlüssel der nicht am Authentifizierungsverfahren beteiligten Clients zu erfolgen hat, um eine sichere Kommunikation zwischen allen Clients C1, C2 zu ermöglichen. Dies ist jedoch einfach bewerkstelligbar, da vorbeschriebener Schlüsselaustausch vom bereits authentifizierten Client C1 zum zusätzlichen zu authentifizierenden Client einfach in Form einer mit dem öffentlichen Schlüssel des betreffenden Clients verschlüsselten Nachricht erfolgen kann.

**Bezugszeichenliste**

| | |
|---|---|
| Server | S |
| Erster Client | C1 |
| Zweiter Client | C2 |
| Zufallszahl | ZF |
| Erster Hashwert | Hash1 |
| Zweiter Hashwert des ersten Clients | HPWC1 |
| Zweiter Hashwert des zweiten Clients | HPWC2 |
| Symmetrischer Schlüssel | Ktan |
| Passwort | PW |
| Initialisierungsvektor | IV |
| Erstes Datenpaket | Token1 |
| Verschlüsseltes erstes Datenpaket | CToken1 |
| zweites Datenpaket | Token2 |
| Verschlüsseltes zweites Datenpaket | CToken2 |
| Erster öffentlicher Schlüssel | PuK1 |
| Zweiter öffentlicher Schlüssel | PuK2 |

## Patentansprüche

1. Verfahren zum Autorisieren eines zweiten Clients (C2) gegenüber einem Server (S) für ein Benutzerkonto zum Aufbau einer sicheren Verbindung zwischen dem zweiten Client (C2) und einem ersten Client (C1), wobei das Verfahren die Schritte aufweist:
a) Erzeugen einer Zufallszahl (ZF) durch den ersten Client (C1) ,
b) Anzeigen der Zufallszahl (ZF) durch den ersten Client (C1) ,
c) Erzeugen eines ersten Hashwertes (Hash1) aus der Zufallszahl (ZF) durch den ersten Client (C1), wobei der erste Hashwertwert (Hash1) einen symmetrischen Schlüssel (Ktan), ein Passwort (PW) und einen Initialisierungsvektor (IV) umfasst,
d) Erzeugen, durch den ersten Client (C1), eines ersten Datenpaketes (Token1) aus einer Bezeichnung des Benutzerkontos, aus einem ersten öffentlichen Schlüssel (PuK1) des ersten Clients (C1) und aus einem Hashwert des ersten öffentlichen Schlüssels (PuK1),
e) Verschlüsseln des ersten Datenpaketes (Token1) mittels des symmetrischen Schlüssels (Ktan) und des Initialisierungsvektors (IV) durch den ersten Client (C1),
f) Erzeugen eines zweiten Hashwertes (HPWC1) aus dem Passwort (PW) unter Verwendung des Initialisierungsvektors (IV) als Salt durch den ersten Client (C1),
g) Übertragen des verschlüsselten ersten Datenpaketes (CToken1) und des zweiten Hashwertes (HPWC1) von dem ersten Client (C1) an den Server (S),
h) Empfangen, durch einen zweiten Client (C2), der Bezeichnung des Benutzerkontos und der Zufallszahl (ZF) von einem Eingabemittel des zweiten Clients (C2),
i) Erzeugen des ersten Hashwertes (Hash1) aus der via Eingabemittel empfangenen Zufallszahl (ZF) durch den zweiten Client (C2), wobei der erste Hashwert (Hash1) den symmetrischen Schlüssel (Ktan), das Passwort (PW) und den Initialisierungsvektor (IV) umfasst,
j) Erzeugen des zweiten Hashwertes (HPWC2) aus dem Passwort (PW) unter Verwendung des Initialisierungsvektors (IV) als Salt durch den zweiten Client (C2),
k) Übertragen des zweiten Hashwertes (HPWC2) von dem zweiten Client (C2) an den Server (S),
l) Vergleichen des von dem ersten Client (C1) erhaltenen zweiten Hashwertes (HPWC1) mit dem von dem zweiten Client (C2) erhaltenen zweiten Hashwert (HPWC2) durch den Server (S) und bei Übereinstimmung Übertragen des verschlüsselten ersten Datenpaketes (CToken1) durch den Server an den zweiten Client (C2),
m) Entschlüsseln des verschlüsselten ersten Datenpaketes (CToken1) mittels des symmetrischen Schlüssels (Ktan) und des Initialisierungsvektors (IV) durch den zweiten Client (C2) zum Erhalten einer entschlüsselten Bezeichnung des Benutzerkontos, eines entschlüsselten zweiten öffentlichen Schlüssels und eines entschlüsselten Hashwertes des zweiten öffentlichen Schlüssels,
n) Vergleichen, durch den zweiten Client (C2), die entschlüsselte Bezeichnung des Benutzerkontos mit dem via Eingabemittel empfangenen Bezeichnung des Benutzerkontos, des entschlüsselten öffentlichen Schlüssels mit dem ersten öffentlichen Schlüssel (PuK1) des ersten Clients (C1) und/oder des entschlüsselten Hashwertes mit dem Hashwert des ersten öffentlichen Schlüssels (PuK1) des ersten Clients (C1) .

2. Verfahren nach dem vorhergehenden Anspruch, mit den Schritten:
o) Erzeugen, durch den zweiten Client (C2), eines zweiten Datenpaketes (Token2) aus der Bezeichnung des Benutzerkontos, aus einem zweiten öffentlichen Schlüssel (PuK2) des zweiten Clients (C2) und aus einem Hashwert des zweiten öffentlichen Schlüssels (PuK2),
p) Verschlüsseln des zweiten Datenpaketes (Token2) mittels des symmetrischen Schlüssels (Ktan) und des Initialisierungsvektors (IV) durch den zweiten Client (C2),
q) Übertragen des verschlüsselten zweiten Datenpaketes (CToken2) von dem zweiten Client (C2) an den Server (S),
r) Übertragen des verschlüsselten zweiten Datenpaketes (CToken2) von dem Server (S) an den ersten Client (C1),
s) Entschlüsseln des verschlüsselten zweiten Datenpaketes (CToken2) mittels des symmetrischen Schlüssels (Ktan) und des Initialisierungsvektors (IV) durch den ersten Client (C1) zum Erhalten einer entschlüsselten Bezeichnung des Benutzerkontos, eines entschlüsselten zweiten öffentlichen Schlüssels und eines entschlüsselten Hashwertes des zweiten öffentlichen Schlüssels,
t) Vergleichen, durch den ersten Client (C1), der entschlüsselten Bezeichnung des Benutzerkontos mit der Bezeichnung des Benutzerkontos, des entschlüsselten zweiten öffentlichen Schlüssels mit dem zweiten öffentlichen Schlüssel (PuK2) des zweiten Clients (C2) und des entschlüsselten Hashwertes mit dem Hashwert des zweiten öffentlichen Schlüssels (PuK2) des zweiten Clients (C2).

3. Verfahren nach einem der vorhergehenden Ansprüche, wobei Schritt d) ferner umfasst: Erzeugen des ersten Datenpaketes (Token1) aus einem Zeitstempel, Schritt e) ferner umfasst: Entschlüsseln des verschlüsselten ersten Datenpaketes (CToken1) zum Erhalten eines entschlüsselten Zeitstempels und Schritt n) ferner umfasst: Vergleichen des entschlüsselten Zeitstempels mit einem aktuellen Zeitstempel.

4. Verfahren nach Anspruch 2, wobei Schritt o) ferner umfasst: Erzeugen des zweiten Datenpaketes (Token2) aus einem Zeitstempel, Schritt s) ferner umfasst: Entschlüsseln des verschlüsselten zweiten Datenpaketes (CToken2) zum Erhalten eines entschlüsselten Zeitstempels und Schritt t) ferner umfasst: Vergleichen des entschlüsselten Zeitstempels mit einem aktuellen Zeitstempel.

5. Verfahren nach einem der vorhergehenden Ansprüche, wobei der erste Hashwert (Hash1) mittels SHA-1, SHA-2 und/oder SHA-3 erzeugt wird, der symmetrische Schlüssel (Ktan) eine Schlüssellänge ≥ 256 Bit aufweist, das Passwort (PW) eine Länge von ≥128 Bit aufweist und/oder der Initialisierungsvektor (IV) eine Länge von ≥128 Bit aufweist.

6. Verfahren nach einem der vorhergehenden Ansprüche, wobei das Verschlüsseln und/oder Entschlüsseln des Datenpaketes (Token1, Token2) mittels ≥ AES-256 durchgeführt wird.

7. Verfahren nach einem der vorhergehenden Ansprüche, wobei das Erzeugen des zweiten Hashwertes (HPWC1, HPWC2) aus dem Passwort (PW) unter Verwendung des Initialisierungsvektors (IV) als Salt mittels ≥ 10 Runden bcrypt durchgeführt wird.

8. Verfahren nach einem der vorhergehenden Ansprüche, wobei die Zufallszahl (ZF) eine Länge von ≥ 24 alphanumerischer Zeichen aufweist.

9. Verfahren nach einem der vorhergehenden Ansprüche, wobei Schritt b) umfasst: Darstellen der Zufallszahl (ZF) Base64-codiert.

10. Verfahren zum Austausch von verschlüsselten Nachrichten zwischen einem ersten Client (C1) und einem zweiten Client (C2), aufweisend die Schritte:
Autorisierendes zweiten Clients (C2) gegenüber einem Server (S) gemäß einem Verfahren nach einem der vorhergehenden Ansprüche,
Verschlüsseln einer Nachricht auf dem ersten Client (C1) mit einem asymmetrischen Verschlüsselungsverfahren,
Übertragen der verschlüsselten Nachricht von dem ersten Client (C1) zu dem zweiten Client (C2), und
Entschlüsseln der Nachricht auf dem zweiten Client (C2) mittels eines asymmetrischen Entschlüsselungsverfahrens.

11. Computersystem mit einem Server (S), einem ersten Client (C1) und wenigstens einem zweiten Client (C2), wobei der Server (S), der erste Client (C1) und der zweite Client (C2) derart ausgestaltet sind, dass ein Verfahren nach einem der vorhergehenden Ansprüche auf dem Server (S), dem ersten Client (C1) und dem zweiten Client (C2) ausgeführt wird.

12. Digitales Speichermedium mit elektronisch auslesbaren Steuersignalen, wobei die Steuersignale so mit einem programmierbaren Computersystem zusammenwirken können, dass ein Verfahren nach einem der vorhergehenden Ansprüche ausgeführt wird.

13. Computer-Programm-Produkt mit auf einem maschinenlesbaren Träger gespeichertem Programmcode zur Durchführung des Verfahrens nach einem der vorhergehenden Ansprüche, wenn der Programmcode auf einer Datenverarbeitungsvorrichtung ausgeführt wird.

## Claims

1. A method for authorising a second client (C2) to a server (S) for a user account in order to establish a secure link between the second client (C2) and a first client (C1), wherein the method comprises the following steps:
a) generating a random number (ZF) by the first client (C1) ,
b) displaying the random number (ZF) by the first client (C1),
c) generating a first hash value (Hash1) from the random number (ZF) by the first client (C1), wherein the first hash value (Hash1) comprises a symmetric key (Ktan), a password (PW) and an initialisation vector (IV),
d) generating, by the first client (C1), a first data packet (Token1) from a name of the user account, from a first public key (PuK1) of the first client (C1), and from a hash value of the first public key (PuK1),
e) encrypting the first data packet (Token1) by means of the symmetric key (Ktan) and the initialisation vector (IV) by the first client (C1),
f) generating a second hash value (HPWC1) from the password (PW) with use of the initialisation vector (IV) as salt by the first client (C1),
g) transmitting the encrypted first data packet (CToken1) and the second hash value (HPWC1) from the first client (C1) to the server (S),
h) receiving, by a second client (C2), the name of the user account and the random number (ZF) from an input means of the second client (C2),
i) generating the first hash value (Hash1) from the random number (ZF) received via input means by the second client (C2), wherein the first hash value (Hash1) comprises the symmetric key (Ktan), the password (PW) and the initialisation vector (IV),
j) generating the second hash value (HPWC2) from the password (PW) with use of the initialisation vector (IV) as salt by the second client (C2),
k) transmitting the second hash value (HPWC2) from the second client (C2) to the server (S),
l) comparing the second hash value (HPWC1) obtained from the first client (C1) with the second hash value (HPWC2) obtained from the second client (C2) by the sever (S) and, in the event of a match, transmitting the encrypted first data packet (CToken1) through the server to the second client (C2),
m) decrypting the encrypted first data packet (CToken1) by means of the symmetric key (Ktan) and the initialisation vector (IV) by the second client (C2) to obtain a decrypted name of the user account, a decrypted second public key, and a decrypted hash value of the second public key,
n) comparing, by the second client (C2), the decrypted name of the user account with the name of the user account received via input means, the decrypted public key with the first public key (PuK1) of the first client (C1), and/or the decrypted hash value with the hash value of the first public key (PuK1) of the first client (C1).

2. The method according to the preceding claims, comprising the following steps:
o) generating, by the second client (C2), a second data packet (Token2) from the name of the user account, from a second public key (PuK2) of the second client (C2), and from a hash value of the second public key (PuK2),
p) encrypting the second data packet (Token2) by means of the symmetric key (Ktan) and the initialisation vector (IV) by the second client (C2),
q) transmitting the encrypted second data packet (CToken2) from the second client (C2) to the server (S),
r) transmitting the encrypted second data packet (CToken2) from the server (S) to the first client (C1),
s) decrypting the encrypted second data packet (CToken2) by means of the symmetric key (Ktan) and the initialisation vector (IV) by the first client (C1) to obtain a decrypted name of the user account, a decrypted second public key, and a decrypted hash value of the second public key,
t) comparing, by the first client (C1), the decrypted name of the user account with the name of the user account, the decrypted second public key with the second public key (PuK2) of the second client (C2), and the decrypted hash value with the hash value of the second public key (PuK2) of the second client (C2).

3. The method according to either one of the preceding claims, wherein step d) also comprises: generating the first data packet (Token1) from a timestamp, step e) also comprises: decrypting the encrypted first data packet (CToken1) to obtain a decrypted timestamp, and step n) also comprises: comparing the decrypted timestamp with a current timestamp.

4. The method according to claim 2, wherein step o) also comprises: generating the second data packet (Token2) from a timestamp, step s) also comprises: decrypting the encrypted second data packet (CToken2) to obtain a decrypted timestamp, and step t) also comprises: comparing the decrypted timestamp with a current timestamp.

5. The method according to any one of the preceding claims, wherein the first hash value (Hash1) is generated by means of SHA-1, SHA-2 and/or SHA-3, the symmetric key (Ktan) has a key length ≥ 256 bits, the password (PW) has a length of ≥ 128 bits, and/or the initialisation vector (IV) has a length of ≥ 128 bits.

6. The method according to any one of the preceding claims, wherein the encryption and/or decryption of the data packet (Token1, Token2) is performed by means of ≥ AES-256.

7. The method according to any one of the preceding claims, wherein the second hash value (HPWC1, HPWC2) is generated from the password (PW) with use of the initialisation vector (IV) as salt by means of ≥ 10 bcrypt rounds.

8. The method according to any one of the preceding claims, wherein the random number (ZF) has a length of ≥ 24 alphanumerical characters.

9. The method according to any one of the preceding claims, wherein step b) comprises: presenting the random number (ZF) in a base64-coded manner.

10. A method for exchanging encrypted messages between a first client (C1) and a second client (C2), said method having the following steps:
authorising the second client (C2) to a server (S) in accordance with a method according to any one of the preceding claims,
encrypting a message on the first client (C1) using an asymmetric encryption method,
transmitting the encrypted message from the first client (C1) to the second client (C2), and
decrypting the message on the second client (C2) by means of an asymmetric decryption method.

11. A computer system having a server (S), a first client (C1) and at least one second client (C2), wherein the server (S), the first client (C1), and the second client (C2) are formed in such a way that a method according to any one of the preceding claims is executed on the server (S), the first client (C1), and the second client (C2).

12. A digital storage medium having electronically readable control signals, wherein the control signals can cooperate with a programmable computer system such that a method according to any one of the preceding claims is performed.

13. A computer program product having program codes stored on a machine-readable medium for carrying out the method according to any one of the preceding claims when the program code is run on a data processing device.

## Revendications

1. Procédé pour l'autorisation d'un deuxième client (C2) par rapport à un serveur (S) pour un compte utilisateur en vue de l'établissement d'une liaison sûre entre le deuxième client (C2) et un premier client (C1), où le procédé comprend les étapes :
a) de génération d'un nombre aléatoire (ZF) par le premier client (C1),
b) d'indication du nombre aléatoire (ZF) par le premier client (C1),
c) de génération d'une première valeur de hachage (Hash1) à partir du nombre aléatoire (ZF) par le premier client (C1), où la première valeur de hachage (Hash1) comprend une clé symétrique (Ktan), un mot de passe (PW) et un vecteur d(initialisation (IV),
d) de génération, par le premier client (C1), d'un premier paquet de données (Token1) à partir d'une désignation du compte utilisateur, à partir d'une première clé publique (PuK1) du premier client (C1) et à partir d'une valeur de hachage de la première clé publique (PuK1),
e) de cryptage du premier paquet de données (Token1) au moyen de la clé symétrique (Ktan) et du vecteur d'initialisation (IV) par le premier client (C1),
f) de génération d'une deuxième valeur de hachage (HPWC1) à partir du mot de passe (PW) moyennant l'utilisation du vecteur d'initialisation (IV) en tant que salage par le premier client (C1)
g) de transmission du premier paquet de données crypté (CToken1) et de la deuxième valeur de hachage (HPWC1) du premier client (C1) vers le serveur (S),
h) de réception, par un deuxième client (C2), de la désignation du compte utilisateur et du nombre aléatoire (ZF) par un moyen d'indication du deuxième client (C2),
i) de génération de la première valeur de hachage (Hash1) à partir du nombre aléatoire (ZF) réceptionné via le moyen d'indication par le deuxième client (C2), où la première valeur de hachage (Hash1) comprend la clé symétrique (Ktan), le mot de passe (PW) et le vecteur d'initialisation (IV),
j) de génération de la deuxième valeur de hachage (HPWC2) à partir du mot de passe (PW) moyennant l'utilisation du vecteur d'initialisation (IV) en tant que salage par le deuxième client (C2),
k) de transmission de la deuxième valeur de hachage (HPWC2) du deuxième client (C2) vers le serveur (S),
l) de comparaison de la deuxième valeur de hachage (HPWC1) obtenue du premier client (C1) avec la deuxième valeur de hachage (HPWC2) obtenue du deuxième client (C2) par le serveur (S) et dans le cas d'une concordance, de transmission du premier paquet de données crypté (CToken1) par le serveur au deuxième client (C2),
m) de décryptage du premier paquet de données crypté (CToken1) au moyen de la clé symétrique (Ktan) et du vecteur d'initialisation (IV) par le deuxième client (C2) par l'obtention d'une désignation décryptée du compte utilisateur, d'une deuxième clé publique décryptée et d'une valeur de hachage décryptée de la deuxième clé publique,
n) de comparaison, par le deuxième client (C2), de la désignation décryptée du compte utilisateur avec la désignation du compte utilisateur réceptionnée via le moyen d'indication, de la clé publique décryptée avec la première clé publique (PuK1) du premier client (C1) et/ou de la valeur de hachage décryptée avec la valeur de hachage de la première clé publique (PuK1) du premier client (C1) .

2. Procédé selon la revendication précédente, avec les étapes :
o) de génération, par le deuxième client, d'un deuxième paquet de données (Token2) à partir de la désignation du compte utilisateur, à partir d'une deuxième clé publique (PuK2) du deuxième client (C2) et à partir d'une valeur de hachage de la deuxième clé publique (PuK2),
p) de cryptage du deuxième paquet de données (Token2) au moyen de la clé symétrique (Ktan) et du vecteur d'initialisation (IV) par le deuxième client (C2),
q) de transmission du deuxième paquet de données crypté (CToken2) du deuxième client (C2) vers le serveur (S),
r) de transmission du deuxième paquet de données crypté (CToken2) du serveur (S) vers le premier client (C1),
s) de décryptage du deuxième paquet de données crypté (CToken2) au moyen de la clé symétrique (Ktan) et du vecteur d'initialisation (IV) par le premier client (C1) pour l'obtention d'une désignation décryptée du compte utilisateur, d'une deuxième clé publique décryptée et d'une valeur de hachage décryptée de la deuxième clé publique,
t) de comparaison, par le premier client (C1), de la désignation décryptée du compte utilisateur avec la désignation du compte utilisateur, de la deuxième clé publique décryptée avec la deuxième clé publique (PuK2) du deuxième client (C2) et de la valeur de hachage décryptée avec la valeur de hachage de la deuxième clé publique (PuK2) du deuxième client (C2).

3. Procédé selon l'une des revendications précédentes, dans lequel l'étape d) comprend en outre : la génération du premier paquet de données (Token1) à partir d'un horodatage, l'étape e) comprend en outre : le décryptage du premier paquet de données crypté (CToken1) pour l'obtention d'un horodatage décrypté, et l'étape n) comprend en outre : la comparaison de l'horodatage décrypté avec un horodatage réel.

4. Procédé selon la revendication 2, dans lequel l'étape o) comprend en outre : la génération du deuxième paquet de données (Token2) à partir de l'horodatage, l'étape s) comprend en outre : le décryptage du deuxième paquet de données crypté (CToken2) pour l'obtention d'un horodatage décrypté et l'étape t) comprend en outre : la comparaison de l'horodatage décrypté avec un horodatage réel.

5. Procédé selon l'une des revendications précédentes, dans lequel la première valeur de hachage (Hash1) est générée au moyen de SHA-1, SHA-2 et/ou SHA-3, la clé symétrique (Ktan) présente une longueur de clé ≥ 256 Bit, le mot de passe(PW) présente une longueur ≥ 128 Bit et/ou le vecteur d'initialisation (IV) présente une longueur ≥ 128 Bit.

6. Procédé selon l'une des revendications précédentes, dans lequel le cryptage et/ou le décryptage du paquet de données (Token1, Token2) est effectué au moyen ≥ AES-256.

7. Procédé selon l'une des revendications précédentes, dans lequel la génération de la deuxième valeur de hachage (HPXV1, HPWC2) est réalisée à partir du mot de passe (PW) moyennant l'utilisation du vecteur d'initialisation (IV) en tant que salage, au moyen ≥ 10 tours bcrypt.

8. Procédé selon l'une des revendications précédentes, dans lequel le nombre aléatoire (ZF) présente une longueur ≥ 24 signes alphanumériques.

9. Procédé selon l'une des revendications précédentes, dans lequel l'étape b) comprend : la représentation du nombre aléatoire (ZF) codée base64.

10. Procédé pour l'échange d'informations cryptées entre un premier client (C1) et un deuxième client (C2), présentant les étapes :
d'autorisation du deuxième client (C2) par rapport à un serveur (S) d'après un procédé selon l'une des revendications précédentes,
de cryptage d'une information sur un premier client (C1) avec un procédé de cryptage asymétrique,
de transmission de l'information cryptée du premier client (C1) vers le deuxième client (C2), et
de décryptage de l'information sur le deuxième client (C2) au moyen d'un procédé de décryptage asymétrique.

11. Système informatique avec un serveur (S), un premier client (C1) et au moins un deuxième client (C2), où le serveur (S), le premier client (C1) et le deuxième client (C2) sont conçus de sorte qu'un procédé selon l'une des revendications précédentes est exécuté sur le serveur (S), le premier client (C1) et le deuxième client (C2) .

12. Support de stockage numérique avec des signaux de commande pouvant être lus électroniquement, où les signaux de commande peuvent agir conjointement avec un système informatique programmable de telle sorte qu'un procédé selon l'une des revendications précédentes est exécuté.

13. Produit de programme informatique avec un code programme stocké sur un support lisible par machine pour l'exécution du procédé selon l'une des revendications précédentes, lorsque le code programme est exécuté sur un dispositif de traitement de données.
